# EUROPÄISCHE PATENTANMELDUNG

(11) **EP 0 847 218 A2**
(43) Veröffentlichungstag der Anmeldung: **10.06.1998**
(21) Anmeldenummer: 97119184.6
(22) Anmeldetag: 03.11.1997
(51) Int. Cl.: H04Q 11/04

(54) **Einrichtung zur Dienstekonvertierung zwischen Breitband-und Schmalband-ISDN-Telekommunikationsanlagen**

(30) Priorität: 05.12.1996 DE 19650389
(71) Anmelder: ROBERT BOSCH GMBH, 70442 Stuttgart (DE)
(72) Erfinder: Sauer, Klaus, Dr., 60488 Frankfurt (DE)

(57) **Zusammenfassung**

Bei einer Einrichtung zur Dienstekonvertierung zwischen Breitband- und Schmalband-ISDN-Telekommunikationsanlagen ist vorgesehen, daß an ein lokales Kommunikationssystem (LCS) einer Mehrdienstevermittlungseinrichtung eine Schmalband-ISDN-Telekommunikationsanlage über mindestens eine Primärraten-Zugangseinheit anschließbar ist, in der insbesondere eine Konvertierung der Signalisierungsprotokolle der Vermittlungsschicht (Schicht 3) und/oder Sicherungsschicht (Schicht 2) gemäß dem OSI-Referenzmodell erfolgt, daß an das lokale Kommunikationssystem (LCS) ferner mindestens eine ATM-Anschlußeinheit (ATM PU) für Breitband-ISDN-Endgeräte, mindestens eine Konvertierungseinheit (IWU) und eine Steuereinheit (CU) angeschlossen sind, daß Nutzkanäle transparent und isochron über die Primärraten-Zugangseinheit, das lokale Kommunikationssystem, die mindestens eine Konvertierungseinheit, das lokale Kommunikationssystem und die mindestens eine Anschlußeinheit geleitet werden.

## Beschreibung

Die Erfindung betrifft eine Einrichtung zur Dienstekonvertierung zwischen Breitband- und Schmalband-ISDN-Telekommunikationsanlagen.

Mindestens in einer Einführungs- bzw. Übergangsphase von ATM-basierten Telekommunikationsanlagen ist eine kooperative Zusammenarbeit zwischen Schmalband-ISDN und Breitband-ISDN erforderlich. Als Übergang zwischen den beiden Systemen sind Konvertierungseinheiten (IWU = Interworking Units) bekanntgeworden. Diese Konvertierungseinheiten und ihre Anwendung sind im Study Group 13 - Report R 30 der International Telecommunication Union (ITU, COM 13-R 30-E) vom Dezember 1994 beschrieben.

Aufgabe der vorliegenden Erfindung ist es, einen Übergang zwischen einer Schmalband-ISDN-Telekommunikationsanlage und einer ATM-Mehrdienstevermittlungseinrichtung für angeschlossene Schmalband-Endegeräte und Breitband-Endgeräte transparent zu gestalten.

Diese Aufgabe wird erfindungsgemäß dadurch gelöst, daß an ein lokales Kommunikationssystem einer Mehrdienstevermittlungseinrichtung eine Schmalband-ISDN-Telekommunikationsanlage über mindestens eine Primärraten-Zugangseinheit anschließbar ist, in der insbesondere eine Konvertierung der Signalisierungsprotokolle der Vermittlungsschicht und/oder Sicherungsschicht gemäß dem OSI-Referenzmodell erfolgt, und daß an das lokale Kommunikationssystem ferner mindestens eine ATM-Anschlußeinheit für Breitband-ISDN-Endgeräte, mindestens eine Konvertierungseinheit und eine Steuereinheit angeschlossen sind, daß Nutzkanäle transparent und isochron über die Primärraten-Zugangseinheit, das lokale Kommunikationssystem, die mindestens eine Konvertierungseinheit, das lokale Kommunikationssystem und die mindestens eine Anschlußeinheit geleitet werden. Durch die Trennung der Nutzkanäle von der Signalisierung kann die Konvertierungseinheit vorteilhafterweise als zentraler Server im Kommunikationssystem benutzt werden.

Vorzugsweise ist bei der erfindungsgemäßen Einrichtung vorgesehen, daß an das lokale Kommunikationssystem mehrere Konvertierungseinheiten angeschlossen sind und daß die Auswahl, zu welcher der Konvertierungseinheiten die Nutzkanäle durchgeschaltet werden, von der Steuereinheit unter Berücksichtigung der Auslastung aller angeschlossenen Konvertierungseinheiten, dienstespezifischer Kenndaten der Signalisierungen, Anzahl und Typ der angeschlossenen Konvertierungseinheiten durchgeführt wird.

Dadurch erfolgt eine optimale Auslastung aller angeschlossenen Konvertierungseinheiten, wobei ein weiter Bereich der Zusammensetzungen der verschiedenen in Anspruch genommenen Dienste möglich ist.

Eine vorteilhafte Ausgestaltung der erfindungsgemäßen Einrichtung besteht darin, daß in der jeweils ausgewählten Konvertierungseinheit eine diensteabhängige Konvertierung der Nutzkanäle in die und aus den entsprechenden ATM-Verbindungen erfolgt.

Eine andere vorteilhafte Ausgestaltung der erfindungsgemäßen Einrichtung besteht darin, daß die Konvertierung der Signalisierungsprotokolle der Vermittlungsschicht des OSI-Referenzmodells in einem getrennt zur Konvertierung der Signalisierungsprotokolle der Sicherungsschicht realisierten Prozeß erfolgt. Dieser Prozeß muß nicht in der Primärraten-Zugangseinheit ablaufen, sondern kann auch in der Steuereinheit oder in den Konvertierungseinheiten realisiert werden.

Die Konvertierung der Signalisierungsprotokolle der Vermittlungsschicht kann vorteilhafterweise entweder über die Primärraten-Zugangseinheit oder über die Steuereinheit erfolgen.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild des erfindungsgemäßen Ausführungsbeispiels und
- Fig. 2: schematisch den Signalfluß zwischen den Komponenten der Mehrdienstevermittlungseinrichtung beim Verbindungsaufbau und während der Verbindung.

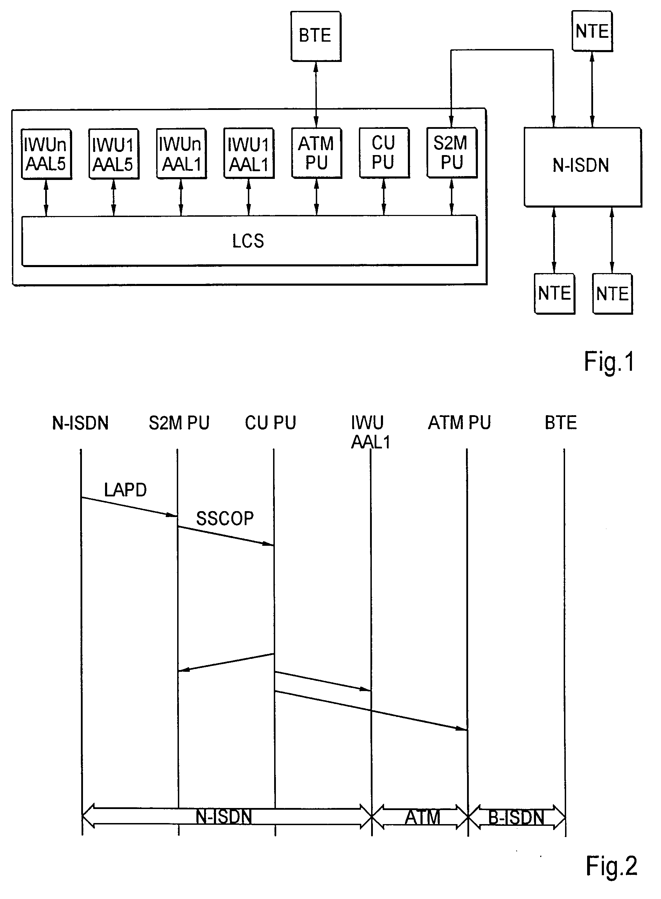

Bei dem Ausführungsbeispiel nach Fig. 1 sind eine Mehrdienstevermittlungseinrichtung ATM MSS (= Multi Service Switch) mit einer Schmalband-ISDN-Telekommunikationsanlage N-ISDN über eine Primärraten-Zugangseinheit (PRA) verbunden, die eine S2M-Schnittstelle und eine Port Unit PU enthält. Über letztere ist die S2M-Schnittstelle mit einem lokalen Kommunikationssystem LCS verbunden. Das lokale Kommunikationssystem LCS ist als ATM-Bus mit einer Kapazität von beispielsweise 1,6 Gbit ausgebildet. Wesentliche Teile eines solchen Bussystems sind beispielsweise in DE 40 42 303 C2 beschrieben.

Das lokale Kommunikationssystem dient zur Verbindung folgender weiterer Komponenten: einer Steuereinheit CU, einer ATM-Anschlußeinheit ATM und mehrerer Konvertierungseinheiten IWU. Die Steuereinheit und die ATM-Anschlußeinheit weisen jeweils eine Port Unit PU auf. An die ATM-Anschlußeinheit ATM ist ein Breitband-ISDN-Endgerät BTE angeschlossen. Je nach Bedarf können an das lokale Kommunikationssystem mehrere ATM-Anschlußeinheiten angeschlossen werden und/oder mehrere Endgeräte an jeweils eine ATM-Anschlußeinheit.

Die Konvertierungseinheiten IWU sind für verschiedene Adaptionsschichten AAL (= ATM-Adaptions-Layer) ausgelegt. So ist beispielsweise eine Adaptionsschicht AAL1 zur Übertragung von zeitsensitiven Signalen konstanter Bitrate vorgesehen, wie beispielsweise Audiosignale. Eine Adaptionsschicht AAL5 betrifft die Übertragung reiner Daten, die nicht zeitkritisch und mit einer variablen Bitrate behaftet sind. Bei dem Ausführungsbeispiel sind jeweils zwei Konvertierungseinheiten IWU1 und IWUn für die Adaptionsschicht AAL1 und zwei Konvertierungseinheiten IWU1 und IWUn für die Adaptionsschicht AAL5 beispielhaft dargestellt.

Nach einem Verbindungswunsch von einem der Endgeräte NTE der Schmalband-ISDN-Telekommunikationsanlage N-ISDN wird von dieser der Verbindungsaufbau mittels des Protokolls LAPD der Primärraten-Zugangseinheit S2M PU zugeleitet. Diese übermittelt nach Konvertierung in das Breitband-ISDN-System die Signalisierung SSCOP an die Steuereinheit CU PU. Dort erfolgt die Konvertierung der Signalisierungsprotokolle der Schicht 3, das heißt, die Nachrichten QSIG werden in die Nachrichten Q2931, Q2932 umgesetzt. Alternativ hierzu kann die Konvertierung der Signalisierungsprotokolle auch direkt über die Primärraten-Zugangseinheit PRA erfolgen.

Die Steuereinheit CU PU erzeugt entsprechende Signalisierungen zum Schalten der ATM-internen Verbindungswege, die an die Primärraten-Zugangseinheit S2M PU, die Konvertierungseinheit IWU AAL1 und die ATM-Anschlußeinheit ATM PU geleitet werden.

Die Nutzkanäle sind damit derart geschaltet, daß zwischen der Schmalband-ISDN-Telekommunikationsanlage N-ISDN und der Konvertierungseinheit IWU AAL1 über das lokale Kommunikationssystem LCS und die Primärraten-Zugangseinheit S2M PU transparent und isochron Daten ausgetauscht werden. Auf der ATM-Ebene erfolgt der Datenaustausch zwischen der Konvertierungseinheit IWU AAL1 und der ATM-Anschlußeinheit ATM PU und damit zum Breitband-Endgerät BTE ebenfalls über das lokale Kommunikationssystem LCS.

## Patentansprüche

1. Einrichtung zur Dienstekonvertierung zwischen Breitband- und Schmalband-ISDN-Telekommunikationsanlagen, dadurch gekennzeichnet, daß an ein lokales Kommunikationssystem einer Mehrdienstevermittlungseinrichtung eine Schmalband-ISDN-Telekommunikationsanlage über mindestens eine Primärraten-Zugangseinheit (PRA) anschließbar ist, in der insbesondere eine Konvertierung der Signalisierungsprotokolle der Vermittlungsschicht (Schicht 3) und/oder Sicherungsschicht (Schicht 2) gemäß dem OSI-Referenzmodell erfolgt, daß an das lokale Kommunikationssystem (LCS) ferner mindestens eine ATM-Anschlußeinheit (ATM PU) für Breitband-ISDN-Endgeräte (BTE), mindestens eine Konvertierungseinheit (IWU) und eine Steuereinheit (CU) angeschlossen sind, und daß Nutzkanäle transparent und isochron über die Primärraten-Zugangseinheit (PRA), das lokale Kommunikationssystem, die mindestens eine Konvertierungseinheit, das lokale Kommunikationssystem und die mindestens eine Anschlußeinheit geleitet werden.

2. Einrichtung nach Anspruch 1, dadurch gekennzeichnet, daß an das lokale Kommunikationssystem (LCS) mehrere Konvertierungseinheiten (IWU) angeschlossen sind und daß die Auswahl, zu welcher der Konvertierungseinheiten die Nutzkanäle durchgeschaltet werden, von der Steuereinheit (CU) unter Berücksichtigung der Auslastung aller angeschlossenen Konvertierungseinheiten (IWU), dienstespezifischer Kenndaten der Signalisierungen, Anzahl und Typ der angeschlossenen Konvertierungseinheiten (IWU) durchgeführt wird.

3. Einrichtung nach Anspruch 2, dadurch gekennzeichnet, daß in der jeweils ausgewählten Konvertierungseinheit (IWU) eine diensteabhängige Konvertierung der Nutzkanäle in die und aus den entsprechenden ATM-Verbindungen erfolgt.

4. Einrichtung nach einem der vorhergehenden Ansprüche, dadurch gekennzeichnet, daß die Konvertierung der Signalisierungsprotokolle der Vermittlungsschicht (Schicht 3) des OSI-Referenzmodells (QSIG zu Q2931, Q2932) in einem getrennt zur Konvertierung der Signalisierungsprotokolle der Sicherungsschicht (Schicht 2) realisierten Prozeß erfolgt.

5. Einrichtung nach einem der vorhergehenden Ansprüche, dadurch gekennzeichnet, daß die Konvertierung der Signalisierungsprotokolle der Vermittlungsschicht (Schicht 3) entweder über die Primärraten-Zugangseinheit (S2M PU) oder über die Steuereinheit (CU) erfolgt.
